# EUROPÄISCHE PATENTSCHRIFT

(11) **EP 0 843 382 B1**
(45) Veröffentlichungstag und Bekanntmachung des Hinweises auf die Patenterteilung: **09.01.2002**
(21) Anmeldenummer: 97117555.9
(22) Anmeldetag: 10.10.1997
(51) Int. Cl.: H01R 4/66

(54) **Erdungseinrichtung, insbesondere für den Reinraumbereich**
Grounding apparatus, particularly for sterile room
Appareil de mise à la terre, en particulier pour salle stérile

(30) Priorität: 14.11.1996 DE 29619800 U
(43) Veröffentlichungstag der Anmeldung: 20.05.1998
(73) Patentinhaber: M+W Zander Facility Engineering GmbH, 70499 Stuttgart (DE)
(72) Erfinder: Wingert, Erhard, 70469 Stuttgart (DE)
(74) Vertreter: Kohl, Karl-Heinz

(56) Entgegenhaltungen:
- EP-A- 0 380 037
- DE-A- 3 305 363
- FR-A- 2 456 401
- GB-A- 2 047 362
- US-A- 4 325 598

## Beschreibung

Die Erfindung betrifft eine Erdungseinrichtung, insbesondere für den Reinraumbereich, nach dem Oberbegriff des Anspruches 1.

Solche Erdungseinrichtungen dienen dazu, elektrisch leitende Teile, beispielsweise metallische Gehäuse von Maschinen, zu erden. Hierfür werden im Reinraumbereich Kupferschienen verwendet, die in einem Doppelboden des Reinraumes verlegt und verschraubt werden. Die Kupferschienen sind mit Befestigungsbohrungen versehen, an welche Equipments sowie mit dem Reinraum zusammenhängende metallische Teile angeschlossen werden können. Die Kupferschienen müssen zusammen mit dem Doppelboden verlegt werden. Da für die Verlegung des Doppelbodens und der Kupferschienen unterschiedliche Fachleute erforderlich sind, bereitet die Terminabstimmung beim Errichten eines Reinraumes erhebliche Probleme. Da die Kupferschienen keine Serienartikel sind, gibt es häufig Lieferprobleme. Da die Kupferschienen starr sind, besteht nur wenig Spielraum beim Verlegen und bei der Montage der Kupferschienen. Häufig müssen an den Kupferschienen auch zusätzliche Bohrungen angebracht werden, da beim Aufstellen der Equipments im Reinraum die standardmäßig vorgesehenen Bohrungen in den Kupferschienen nicht ausreichen. Das Anbringen der zusätzlichen Bohrungen führt zu Metallspänen sowie zu einer Verschmutzung des Reinraumes. Da im Reinraum auch naß gearbeitet wird, besteht bei Austritt von Flüssigkeit das Problem der Kontaktkorrosion an den Kupferschienen, wodurch die Funktionsfähigkeit der Erdungseinrichtung beeinträchtigt wird.

Schließlich sind die Kupferscheinen in der Herstellung sowie der Montage teuer.

Es sind Erdungseinrichtungen bekannt (FR-A 2 456 401), bei denen Erdungsleiter mit Telefonleitungen über elektrische Anschlußklemmen leitend miteinander verbunden werden. Die Erdungsleiter und Telefonleitungen verlaufen parallel zueinander durch die Anschlußklemmen.

Es ist auch bekannt (EP-A-0380037), bei einem Reinraum zum Schutz vor Eindringen von Radiofrequenzstrahlung eine Antenne vorzusehen, die aus einander senkrecht kreuzenden Drähten besteht, die zur Erdung an ein Gehäuse angeschlossen sind.

Der Erfindung liegt die Aufgabe zugrunde, die gattungsgemäße Erdungseinrichtung dieser Art so auszubilden, daß sie bei kostengünstiger Herstellung und einfacher Montage an die unterschiedlichsten Einbaugegebenheiten angepaßt werden kann.

Diese Aufgabe wird bei der gattungsgemäßen Erdungseinrichtung erfindungsgemäß mit den kennzeichnenden Merkmalen des Anspruches 1 gelöst.

Bei der erfindungsgemäßen Erdungseinrichtung sind die Erdungsleiter gitterartig im Einbauraum angeordnet und über die an ihren Kreuzungspunkten vorgesehenen Anschlußklemmen leitend miteinander verbunden. Dadurch können sämtliche, beispielsweise in einem Reinraum untergebrachte Maschinen auf einfache, kostengünstige Weise mit der Erdungseinrichtung verbunden werden. Aufgrund der einander kreuzenden Erdungsleiter können die zu erdenden Teile frei im Raum angeordnet werden, da eine genaue Zuordnung von Erdungsleiter und zu erdenden Teilen nicht notwendig ist. Der Verbindungsleiter des elektrischen Teiles kann an jeden beliebigen Leiter der Erdungseinrichtung mit der Anschlußklemme angeschlossen werden. Die Anschlußstellen können innerhalb der Erdungseinrichtung an jeder geeigneten Stelle liegen. Dadurch ist auf konstruktiv einfache Weise eine optimale Verbindung der elektrischen Teile mit der Erdungseinrichtung gewährleistet. Mit der erfindungsgemäßen Erdungseinrichtung ist eine problemlose, einfache und vor allen Dingen äußerst kostengünstige Montage gewährleistet.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung einen Reinraum mit einer erfindungsgemäßen Erdungseinrichtung,
- Fig. 2: in schematischer Darstellung die erfindungsgemäße Erdungseinrichtung, die in einem Doppelboden und einem Technikgeschoß des Reinraumes gemäß Fig. 1 vorgesehen ist,
- Fig. 3 bis Fig. 7: unterschiedliche Verbindungen und Anschlüsse der Erdungseinrichtung.

Die Erdungseinrichtung wird vorteilhaft im Reinraumbereich eingesetzt, kann aber auch bei anderen Systemen verwendet werden, bei denen eine Erdung vorgesehen oder sogar vorgeschrieben ist. Im folgenden wird die Erdungseinrichtung in Verbindung mit einem Reinraum näher beschrieben.

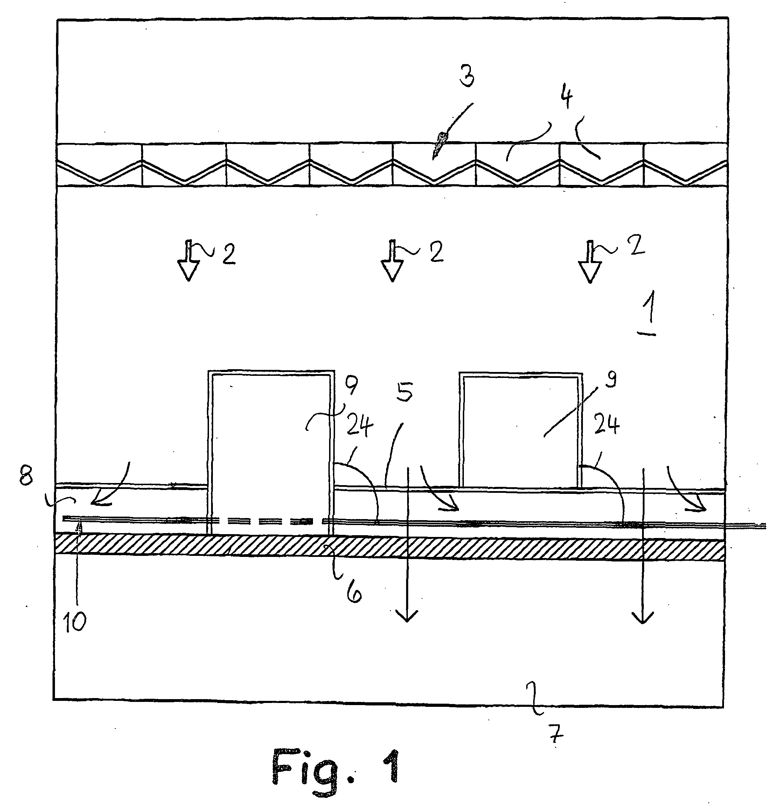

Fig. 1 zeigt einen Reinraum 1, der, durch Pfeile 2 veranschaulicht, von Reinluft vertikal durchströmt wird. Der Reinraum 1 wird nach oben durch eine Rasterdecke 3 begrenzt, die in bekannter Weise eine (nicht dargestellte) Rahmenkonstruktion aufweist, mittels der Filter-Ventilator-Einheiten 4 gehalten sind. Der Boden 5 des Reinraumes 1 ist als Doppelboden ausgebildet. Unterhalb des Doppelbodens 5 befindet sich eine Geschoßdecke 6 eines Technikgeschosses 7, das sich im Bereich unterhalb des Reinraumes 1 befindet. Der Doppelboden 5 ist in bekannter Weise mit Durchtrittsöffnungen für die Reinluft 2 versehen, die somit durch den Doppelboden 5 in einen Raum 8 strömt. In ihm wird die Reinluft 2 umgelenkt und in bekannter Weise durch (nicht dargestellte) Ventilatoren der Filter-Ventilator-Einheiten 4 nach oben angesaugt. Die Reinluft strömt dann durch die abgehängte Rasterdecke 3 von oben nach unten in den Reinraum 1 zurück. Ein Teil der durch den Doppelboden 5 gelangenden Reinluft kann durch (nicht dargestellte) Öffnungen in der Geschoßdecke 6 in das Technikgeschoß 7 strömen.

Auf dem Doppelboden 5 sind Maschinen 9, sogenannte Equipments, aufgestellt. In Fig. 1 ist nur ein solches Equipment dargestellt. Das Equipment 9 kann auch durch Öffnungen im Doppelboden 5 ragen und auf der Geschoßdecke 6 aufliegen, wie dies in Fig. 1 beispielhaft für das linke Equipment 9 dargestellt ist.

Die Maschinen 9 sind an eine Erdungseinrichtung 10 angeschlossen, die sich im Doppelboden 5 befindet.

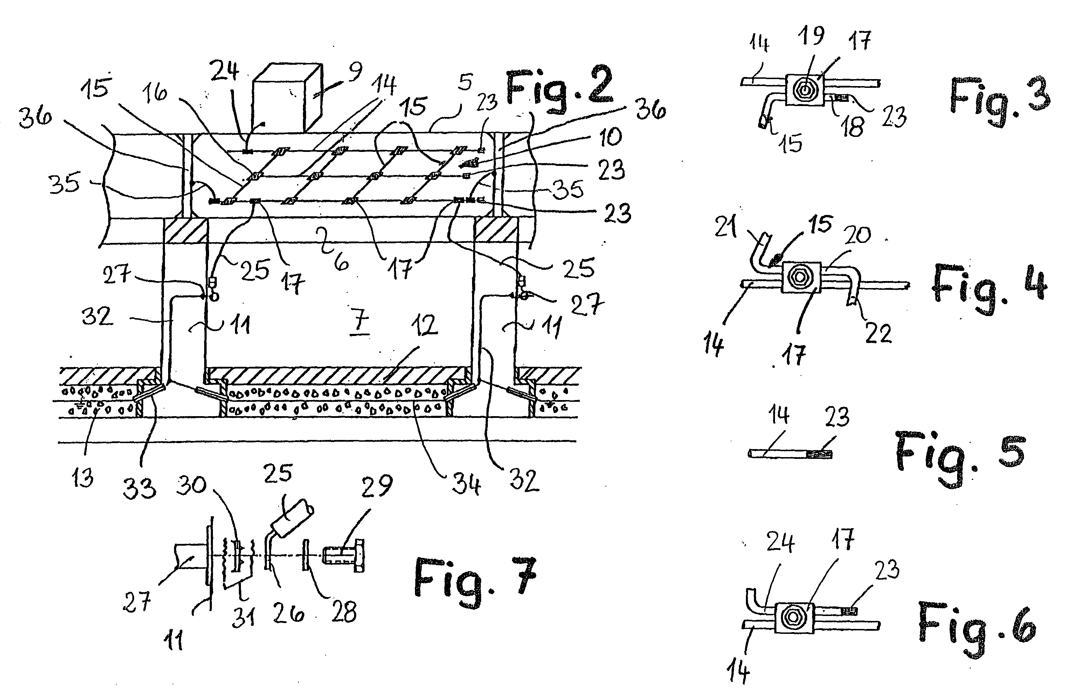

Wie Fig. 2 zeigt, ist die Geschoßdecke 6 über Stützen 11 auf einem Fundament 12 abgestützt. Das Fundament 12 liegt auf einem Untergrund 13 auf.

Die Erdungseinrichtung 10 ist rasterförmig ausgebildet und weist einander kreuzende, vorzugsweise senkrecht kreuzende Leiter 14, 15 auf, die an den Kreuzungspunkten 16 in noch zu beschreibender Weise leitend miteinander verbunden sind. Die Leiter 14, 15 sind vorteilhaft als Rundleiter ausgebildet und haben einen Isoliermantel, der vorzugsweise aus Polyvinylchlorid besteht, aber auch aus jedem anderen isolierenden Kunststoff bestehen kann. Der Isoliermantel umgibt eine Vielzahl von einzelnen Leitungen. Die Leiter 14, 15 sind somit vorteilhaft Vielleiter. Der Isoliermantel gewährleistet, daß keine Feuchtigkeit an die Leitungen innerhalb der Leiter 14, 15 gelangen kann. An den Kreuzungspunkten 16 werden Anschlußklemmen 17 montiert, die an sich bekannt sind und darum nicht im einzelnen beschrieben werden. Die Anschlußklemmen 17 bestehen aus zwei gegeneinander verspannbaren Klemmteilen, die an ihren einander zugewandten Seiten metallische Zähne aufweisen, die beim Verspannen der Klemmteile gegeneinander den Isoliermantel der zwischen ihnen befindlichen Bereiche der Leiter 14, 15 durchdringen. Auf diese Weise wird über die Anschlußklemmen 17 eine elektrische Verbindung zwischen den einander kreuzenden Leitern 14, 15 hergestellt.

Fig. 3 zeigt das Klemmelement 17, das einen randseitigen Leiter 14 mit einem senkrecht zu ihm verlaufenden Leiter 15 verbindet. Der randseitige Leiter 14 verläuft gerade, während der quer zu ihm liegende Leiter 15 mit einem abgewinkelten Ende 18 in der Anschlußklemme 17 gehalten ist. In der Darstellung gemäß Fig. 3 werden die beiden Teile der Anschlußklemme 17 in der Zeichenebene von oben und unten an den Leiter 14 und an das abgewinkelte Ende 18 des Leiters 15 angesetzt. Anschließend werden mit einer Klemmschraube 19 die beiden Klemmteile der Anschlußklemme 17 gegeneinander gezogen, wobei die (nicht dargestellten) metallischen Zähne dieser Anschlußteile die Isolierung der Leiter 14, 15 durchdringen und mit den vom Isoliermantel umschlossenen Leitungen in Kontakt kommen. Das abgewinkelte Ende 18 des Leiters 14 verläuft mit Abstand parallel zum randseitigen Leiter 14. Auf die beschriebene Weise sind die Leiter 15 mit ihren entsprechend abgewinkelten Enden mit den beiden randseitigen Leitern 14 (Fig. 2) verbunden.

In gleicher Weise ist auch der in Fig. 2 linke randseitige Leiter 15 mit einem Ende des mittleren Leiters 14 über die Anschlußklemme 17 verbunden.

Fig. 4 zeigt die Verhältnisse an den Kreuzungspunkten 16. Um die beiden Leiter 14, 15 mittels der Anschlußklemme 17 miteinander verbinden zu können, ist der eine Leiter 15 im Kreuzungsbereich etwa Z-förmig gebogen. Dadurch liegt ein mittlerer Bereich 20 dieses Leiters 15, der von der Anschlußklemme 17 erfaßt wird, mit Abstand und parallel zum Leiter 14. Der mittlere Teil 20 sowie der parallel zu ihm liegende Leiter 14 werden in der beschriebenen Weise über die Anschlußklemme 17 leitend miteinander verbunden. Die an den mittleren Teil 20 anschließenden Teile 21 und 22 des Leiters 15 verlaufen zu den randseitigen Leitern 14 (Fig. 2), sofern die Erdungseinrichtung 10 lediglich drei parallel zueinander verlaufende Leiter 14 aufweist.

Wie Fig. 2 zeigt, erstrecken sich die rechten Enden der Leiter 14 über den entsprechenden randseitigen Leiter 15 hinaus. In diesem Falle ist auf die Enden dieser Leiter 14 eine Endkappe 23 aufgesetzt (Fig. 5), so daß die frei liegenden Enden der Leitungen innerhalb des jeweiligen Leiters 14 abgedeckt sind. In gleicher Weise sitzt auch auf dem Ende des abgewinkelten Teiles 18 des Leiters 15 (Fig. 3) eine entsprechende Endkappe 23.

Fig. 6 zeigt die Verbindung zwischen einem randseitigen Leiter 14 und einem Verbindungsleiter 24, mit dem die jeweilige Maschine 9 mit der Erdungseinrichtung 10 verbunden wird (Fig. 2). Der Verbindungsleiter 24 ist vorteilhaft gleich ausgebildet wie die Leiter 14, 15. Die Verbindung zwischen den beiden Leitern 14, 24 erfolgt ebenfalls über die Anschlußklemme 17. Auf das freie Ende des Verbindungsleiters 24 ist die Endkappe 23 aufgesetzt.

Sämtliche Maschinen 9 sind über jeweils einen Verbindungsleiter 24 in der beschriebenen Weise mit der Erdungseinrichtung 10 verbunden (Fig. 1). Der Verbindungsleiter 24 kann an einen der Leiter 14, 15 der Erdungseinrichtung 10 mit der Anschlußklemme 17 angeschlossen werden. Die Anschlußstellen können innerhalb der Erdungseinrichtung 10 an jeder geeigneten Stelle erfolgen.

Wie Fig. 2 zeigt, sind an die Erdungseinrichtung 10 Ableitungen 25 angeschlossen. Sie werden durch Leiter gebildet, die vorteilhaft gleich ausgebildet sind wie die Leiter 14, 15. Im dargestellten Ausführungsbeispiel sind die Ableitungen 25 an einen randseitigen Leiter 14 mit jeweils einer Anschlußklemme 17 angeschlossen. Die beiden Ableitungen 25 sind jeweils zu einer Stütze 11 geführt. Wie Fig. 7 zeigt, ist am freien Ende der Ableitung 25 ein Kabelschuh 26 befestigt, mit dem die Ableitung 25 an einen Erdungsanschluß 27 angeschlossen wird. Der Kabelschuh 26 wird unter Zwischenlage einer Spannscheibe 28 mittels einer Schraube 29 am Erdungsanschluß 27 in bekannter Weise befestigt. Zwischen dem Erdungsanschluß 27 und dem Kabelschuh 26 ist eine Kontaktscheibe 30 vorgesehen, die auf beiden Seiten mit Zähnen versehen ist und von der Schraube 29 durchsetzt wird. Um einen guten Kontakt zwischen dem Kabelschuh 26 und dem Erdungsanschluß 27 zu gewährleisten, wird auf beide Seiten der Kontaktscheibe 30 eine Kontaktschutzpaste 31 aufgebracht.

Vom Erdungsanschluß 27 führt eine weitere Ableitung 32 (Fig. 2) durch eine Durchführung 33 in den Untergrund 13.

Die Ableitung 32 ist über eine Verbindungsleitung 34, die durch den Untergrund 13 geführt ist, mit der Ableitung 32 des benachbarten Erdungsanschlusses 27 verbunden.

Als weitere Erdungsmaßnahme ist die Erdungseinrichtung 10 über Verbindungsleiter 35 mit Stützen 36 verbunden, die sich zwischen der Geschoßdecke 6 und dem Boden 5 erstrecken (Fig. 2). Die Verbindungsleiter 35 sind ebenfalls über die Anschlußklemmen 17 mit den entsprechenden Leitern 14, 15 der Erdungseinrichtung 10 verbunden.

Die Verbindungsleitung 34 und die Verbindungsleiter 35 sind vorteilhaft gleich ausgebildet wie die Leiter 14, 15 der Erdungseinrichtung 10.

Die Leiter 14, 15 sind in der beschriebenen Weise im Rastermaß im Doppelboden 5 eingezogen bzw. im Doppelboden verlegt. Da die einzelnen Leiter 14, 15 mit Isoliermaterial ummantelt sind, sind sie hervorragend gegen Feuchtigkeitszutritt geschützt. Mit den Anschlußklemmen 17 wird die erforderliche elektrische Verbindung zwischen den Leitern 14, 15 in einfacher Weise erreicht. Die Anschlußklemmen17 durchdringen mit Zähnen den Isoliermantel der Leiter 14, 15. Da auch zum Anschluß der Maschinen 9 die gleichen Anschlußklemmen 17 verwendet werden, kann der gleiche Klemmentyp verwendet werden. Die Anschlußklemmen können herkömmliche Bauteile sein, die kostengünstig jederzeit zur Verfügung stehen. Auch die Verbindungsleiter 24, 25, 35 werden mit den Anschlußklemmen 17 an die Erdungseinrichtung 10 angeschlossen. Die Leiter 14, 15 sind hochflexibel, so daß ihre Verlegung keine Probleme bereitet. Die flexiblen Leitungen sind kostengünstig und stellen Massenware dar, so daß Lieferprobleme nicht auftreten. Je nach vorhandenem Einbauraum können die Leiter 14, 15 beliebig verlegt werden, beispielsweise auch um Hindernisse herum verlegt werden. Die Erdungseinrichtung 10 kann nach der Montage des Doppelbodens 5 eingebracht werden, so daß beispielsweise Schwierigkeiten bei der Terminabstimmung zwischen den Monteuren des Doppelbodens und der Erdungseinrichtung minimiert werden. Da für die Erdungseinrichtung Standardteile eingesetzt werden, können sie problemlos und insbesondere ohne Lieferschwierigkeiten beschafft werden. Die biegsamen Leiter 14, 15 können von einer Trommel abgezogen und in den Doppelboden 5 eingezogen werden. Die Maschinen 9 können an beliebigem Ort und beliebig oft angeschlossen werden. Auf Maß- und Montagetoleranzen muß nicht geachtet werden, da die flexiblen Leiter 14, 15 ohne Schwierigkeiten an die gewünschte Stelle gebracht werden können. Die Leiter 14, 15 werden lediglich in der erforderlichen Länge abgetrennt und an den Enden isoliert. Die Anschlußklemmen 17 werden auf die Leiter 14, 15 in der beschriebenen Weise aufgeklemmt, wozu nur ein einfacher Schraubvorgang erforderlich ist. Die Leiter 14, 15 können vor Ort zugeschnitten werden, so daß Einbaugegebenheiten einfach berücksichtigt werden können. Es ist jederzeit möglich, die Erdungseinrichtung 10 problemlos zu ändern. Da die Leiter 14, 15 mit Kunststoff ummantelt sind, tritt kein Kupferabtrag auf, der den Reinraum 1 oder die Reinluft kontaminieren könnte.

Die Erdungseinrichtung 10 ist im dargestellten Ausführungsbeispiel im Doppelboden 5 des Reinraumes 1 angeordnet. Die Erdungseinrichtung 10 kann in gleicher Weise beispielsweise auch in der Decke angeordnet sein, zum Beispiel bei Reinräumen im Pharmaziebereich.

## Patentansprüche

1. Erdungseinrichtung mit Erdungsleitern (14, 15), an die über Verbindungsleitungen (24) elektrisch leitende Teile (9) angeschlossen sind und die über wenigstens eine Ableitung (25) mit dem Untergrund verbunden sind, wobei die Erdungsleiter (14, 15) flexible Leitungen sind, die durch Anschlußklemmen (17) leitend miteinander verbunden sind,
**dadurch gekennzeichnet, daß** die insbesondere für den Reinraumbereich vorgesehenen Erdungsleiter (14, 15) einander kreuzen und an den Kreuzungspunkten (16) mit den Anschlußklemmen (17) leitend miteinander verbunden sind.

2. Erdungseinrichtung nach Anspruch 1,
**dadurch gekennzeichnet, daß** die Erdungsleiter (14, 15) einen Isoliermantel haben, der einzelne Leitungen umgibt.

3. Erdungseinrichtung nach Anspruch 1 oder 2,
**dadurch gekennzeichnet, daß** die Anschlußklemme (17) den Isoliermantel des Erdungsleiters (14, 15) durchdringt.

4. Erdungseinrichtung nach einem der Ansprüche 1 bis 3,
**dadurch gekennzeichnet, daß** die Anschlußklemme (17) aus zwei gegeneinander verspannbaren Klemmteilen besteht.

5. Erdungseinrichtung nach Anspruch 4,
**dadurch gekennzeichnet, daß** zumindest der eine, vorzugsweise beide Klemmteile mit metallischen Zähnen versehen ist (sind).

6. Erdungseinrichtung nach einem der Ansprüche 1 bis 5,
**dadurch gekennzeichnet, daß** die Erdungsleiter (14, 15) im Rastermaß verlegt sind.

7. Erdungseinrichtung nach einem der Ansprüche 1 bis 6,
**dadurch gekennzeichnet, daß** die Verbindungsleitung (24) flexibel ausgebildet ist.

8. Erdungseinrichtung nach einem der Ansprüche 1 bis 7,
**dadurch gekennzeichnet, daß** die Erdungseinrichtung (10) über wenigstens eine flexible Leitung (25) mit der Ableitung (27, 32) verbunden ist.

9. Erdungseinrichtung nach Anspruch 8,
**dadurch gekennzeichnet, daß** die flexible Leitung (25) mit den Anschlußklemmen (17) an die Erdungseinrichtung (10) und an die Ableitung (27, 32) angeschlossen ist.

10. Erdungseinrichtung nach einem der Ansprüche 1 bis 9,
**dadurch gekennzeichnet, daß** die Erdungseinrichtung (10) in einem Boden (5) eines Reinraumes (1) untergebracht ist.

11. Erdungseinrichtung nach einem der Ansprüche 1 bis 9,
**dadurch gekennzeichnet, daß** die Erdungseinrichtung (10) in einem Deckenbereich des Reinraumes (1) angeordnet ist.

## Claims

1. An earthing device with earth wires (14, 15) to which parts (9), electrically conducting via interconnections (24), are linked and which are connected to the ground via at least one down connector (25), the earth wires (14, 15) being flexible lines conductively connected with one another via connection terminals (17),
**characterised in that** the earth wires (14, 15) provided in particular for the clean-room area cross one another and at the crossing points (16) are conductively connected with one another with the connection terminals (17).

2. An earthing device according to Claim 1,
**characterised in that** the earth wires (14, 15) have an insulating sheath which surrounds individual lines.

3. An earthing device according to Claim 1 or 2,
**characterised in that** the connection terminal (17) penetrates the insulating sheath of the earth wire (14, 15).

4. An earthing device according to Claim 1 to 3,
**characterised in that** the connection terminal (17) consists of two terminal parts braceable against one another.

5. An earthing device according to Claim 4,
**characterised in that** at least one, preferably both terminal parts is (are) provided with metal teeth.

6. An earthing device according to one of Claims 1 to 5,
**characterised in that** the earth wires (14, 15) are laid in a grid pattern.

7. An earthing device according to one of Claims 1 to 6,
**characterised in that** the interconnection (24) is of a flexible design.

8. An earthing device according to one of Claims 1 to 7,
**characterised in that** the earthing device (10) is connected to the down connector (27, 32) via at least one flexible line (25).

9. An earthing device according to Claim 8,
**characterised in that** the flexible line (25) is linked to the earthing device (10) and to the down connector (27, 32) with the connection terminals (17).

10. An earthing device according to one of Claims 1 to 9,
**characterised in that** the earthing device (10) is accommodated in a floor (5) of a clean room (1).

11. An earthing device according to one of Claims 1 to 9,
**characterised in that** the earthing device (10) is arranged in a ceiling area of the clean room (1).

## Revendications

1. Dispositif de mise à la terre équipé de conducteurs de mise à la terre (14, 15), auquel des parties électriquement conductrices (9) sont reliées par l'intermédiaire de lignes de liaison (24) et qui sont reliés à la fondation par au moins une dérivation (25), les conducteurs de mise à la terre (14, 15) étant des lignes flexibles, qui sont réunies les unes aux autres de façon conductrice par l'intermédiaire de bornes de raccordement (17),
**caractérisé en ce que** les conducteurs de mise à la terre (14, 15) prévus en particulier pour la salle stérile se croisent mutuellement et sont reliés de façon conductrice entre eux aux points de croisement (16) avec les bornes de raccordement (17).

2. Dispositif de mise à la terre selon la revendication 1, **caractérisé en ce que** les conducteurs de mise à la terre (14, 15) possèdent une enveloppe isolante, qui entoure les différentes lignes.

3. Dispositif de mise à la terre selon la revendication 1 ou 2, **caractérisé en ce que** la borne de raccordement (17) pénètre l'enveloppe isolante du conducteur de mise à la terre (14, 15).

4. Dispositif de mise à la terre selon l'une des revendications 1 à 3, **caractérisé en ce que** la borne de raccordement (17) se compose de deux éléments de borne pouvant être serrés l'un contre l'autre.

5. Dispositif de mise à la terre selon la revendication 4, **caractérisé en ce qu'**au moins l'un, de préférence les deux éléments de borne est(sont) munis de dents métalliques.

6. Dispositif de mise à la terre selon l'une des revendications 1 à 5, **caractérisé en ce que** les conducteurs de mise à la terre (14, 15) sont disposés en réseau.

7. Dispositif de mise à la terre selon l'une des revendications 1 à 6, **caractérisé en ce que** la ligne de liaison (24) est flexible.

8. Dispositif de mise à la terre selon l'une des revendications 1 à 7, **caractérisé en ce que** le dispositif de mise à la terre (10) est relié à la dérivation (27, 32) par l'intermédiaire d'au moins une ligne flexible (25).

9. Dispositif de mise à la terre selon la revendication 8, **caractérisé en ce que** la ligne flexible (25) est reliée par les bornes de raccordement (17) au dispositif de mise à la terre (10) et à la dérivation (27, 32).

10. Dispositif de mise à la terre selon l'une des revendications 1 à 9, **caractérisé en ce que** le dispositif de mise à la terre (10) est disposé dans le sol (5) d'une salle stérile (1).

11. Dispositif de mise à la terre selon l'une des revendications 1 à 9, **caractérisé en ce que** le dispositif de mise à la terre (10) est disposé dans le plafond de la salle stérile (1).
